# EUROPEAN PATENT SPECIFICATION

(11) **EP 0 731 735 B1**
(45) Date of publication and mention of the grant of the patent: **11.11.1998**
(21) Application number: 95903304.4
(22) Date of filing: 29.11.1994
(51) Int. Cl.: B05B 3/02

(54) **Pan type coater**
Topfbeschichter
Dispositif d'enrobage du type à cuvette

(30) Priority: 02.12.1993 GB 9324798
(43) Date of publication of application: 18.09.1996
(73) Proprietor: FINNFEEDS INTERNATIONAL LTD., Marlborough, Wiltshire SN8 1AA (GB)
(72) Inventor: NISSINEN, V. J., Finnfeeds Int. Market House, Marlborough,Wiltshire SN8 1AA (GB); SCHRAUWEN, L. J. M., Schrauwen Trading & Eng.N.V., B-2910 Essen -2910 Essen (BE); SCHRAUWEN, D. R. G., Schrauwen Trading & Eng.N.V., B-2910 Essen Essen (BE)
(74) Representative: Hansen, Bernd, Dr. Dipl.-Chem.
(86) International application number: EP9403959
(87) International publication number: WO9515218

(56) References cited:
- EP-A- 0 521 214
- WO-A-83/00480
- DE-U- 9 110 546
- FR-A- 395 490
- FR-A- 689 140
- FR-A- 819 353
- FR-A- 1 201 704
- GB-A- 745 294
- US-A- 3 798 338
- US-A- 3 850 373
- US-A- 4 221 331

## Description

The present invention relates to a pan-type coater for continuous spraying of liquid onto particulate solids, such a coater including a sprayer head for use in spraying liquids onto particulate solids, and use of the pan-type coater.

Various types of sprayer bead are known for use in spraying liquid onto particulate solids such as pellets, briquets, crumbles, granules, granulates, powders, ground material' or the like ("solids" hereinafter). An atomising head having a hydraulic nozzle with fine holes through which pressurized liquid is sprayed is known, but is susceptible to blockage by particles in the liquid.

It is also known to create a liquid spray in an air atomiser by a combination of liquid and air pressure, as used in e.g. car painting equipment. This has larger holes and is less susceptible to blockage. However a wide range of droplet sizes is created.

It is also known to create a spray by feeding the liquid to be sprayed onto the surface of a rapidly rotating disc. On contact with the disc, the centrifugal force creates a horizontal curtain of liquid, which can be broken into a fine spray by providing fine protrusions on the perimeter of the disc. Such devices are suitable for creating a horizontal spray to coat solids passed vertically through the spray. However, they are unsuitable for creating a cone-shaped spray for coating solids passing horizontally below the sprayer head.

For such applications, a known sprayer head is shown in EP-A-0 349 510. In this system, shown schematically in Figure 1, a centrifuge driven at at speed of between 500 and 6000 rpm is used to break up the liquid into fine droplets. A narrow range of droplet size can be achieved, e.g. 40-60 um according to rotation speed and liquid properties.

The centrifuge comprises a rotatable blade in the form of a cross-beam 1 and a tapered centrifuge housing 2. Liquid is introduced into the centrifuge through an injector 3. The droplets are projected with some force, and the compressed air carries the particles in a downward spray cone.

However, there are a number of problems with this type of sprayer. Firstly, large droplets, many times larger than the desired droplet size, can occasionally drip from the cross bar straight downwards under gravity. Secondly, it is difficult to create an annular cone-shaped curtain of spray with such a system. If a stationary deflector is placed under the centrifuge, more large droplets would be created.

Such larger droplets are undesirable where the evenness of the distribution of the spray is critical. One such application is in spraying enzymes in very small quantities onto animal feed pellets. It may be unacceptable to allow any such larger droplets to be sprayed, if they would cause a few pellets to be grossly overdosed. There may be no opportunity for the large drops to be dispersed between many pellets if the pellets are absorbent, or if the large droplets strike the pellets near an outlet where there is less contact between pellets.

Grossly overdosing a few pellets would either cause all the others to be underdosed, or would require larger quantities of liquid to be sprayed. For expensive liquids this wastage is undesirable. Trapping and recirculating the large droplets back into the sprayer head is impractical when spraying small quantities.

In summary, it is important for accurate dosage that virtually all of the liquid injected into the sprayer is converted into small droplets and accurately directed onto the solids.

The same problem of achieving accurate dosage requires the solids to be presented evenly to the spray. In a pan-type coater known from GB 1 499 591, items of food are tumbled while being sprayed. In another known device marketed by Amandus Kahl of D-21465 Reinbek, bei Hamburg, known as the ROTOSPRAY, pellets can be coated in an inverted conical shaped chamber. Liquid is sprayed horizontally from the centre of the chamber, and pellets are tumbled within the chamber. Distributor arms are rotated within the fixed chamber to bounce the pellets across the chamber into the horizontal spray.

A further known liquid coater is marketed by Hough International. In this device an even circular curtain of pellets are dropped through a horizontal spray into a mixing chamber. In the mixing chamber, agitator arms blend and move the pellets towards a central discharge aperture.

In all these known systems there are problems of uneven distribution of liquid, or wastage of liquid, or both.

Uneven distribution of liquid may be caused by a short dwell time when pellets are exposed to the spray, or by unpredictable poorly controlled random tumbling of the pellets.

Wastage of liquid may be caused by spraying an incomplete, random array of pellets therefore allowing the liquid onto the side walls or base of the coating pan, from where it may not be absorbed completely into the pellets.

Reference is made to US-A-3,798,338, which discloses a coating drum which rotates about a horizontal axis to impart a tumbling action, similar to that afforded by a tumble dryer, to the pieces of material as they are conveyed within the drum by the action of the helical flight.

Similarly, FR-A-395 490 discloses a spraying system in which a bed is formed on the bottom cylindrical inner surface of a cylinder rotating about an approximately horizontal axis with a slight downward slope, onto which droplets are sprayed from a spray pipe.

In the case of both references, the bed agitation is similar to the tumbling action of a tumble dryer.

It is an object of the present invention to provide more accurate dosage of liquid sprayed onto solids.

According to the invention there is provided a pan-type coater for continuous spraying of liquid onto solids, comprising:
a pan arranged for rotation about an upright axis passing through the centre of the pan;
first means for rotating the pan about its upright axis;
second means for feeding the solids onto the base of the pan to create a bed of solids on the base;
a sprayer for spraying a zone of the bed of solids from above; and
third means for moving the bed of solids on the base in a direction towards or away from said upright axis and through the spraying zone towards an outlet of the pan-type coater while bringing solids from beneath the surface of the bed, up to the surface of the bed, to expose substantially all of the solids to the spray for a substantially uniform dwell time before passing through said outlet.

Advantageously the third means comprises an arrangement of paddles, relative to which the pan is rotatable, for moving the solids and bringing the solids to the surface as the pan rotates about its upright axis.

Advantageously the spraying zone comprises a ring around the centre of the pan.

In a preferred embodiment, advantageously the outlet is in the centre of the pan, and the inlet at the periphery, or vice versa.

Advantageously, the arrangement of the paddles is such that the bed of solids is moved in a spiral path of at least 360° from the inlet to the outlet through the spraying zone.

Advantageously the base of the pan is substantially horizontal.

Preferably the coater is arranged so that, in operation, the average time any part of the bed remains in the spraying zone is 20 to 40 seconds.

In a particularly preferred embodiment of the sprayer a pan-type coater, wherein the sprayer comprises an inlet, means for dividing a flow of liquid from the inlet into droplets, a rotatable deflector mounted in the path of the droplets, and drive means for spinning the deflector.

Advantageously the deflector is substantially circular viewed along its axis of rotation. This assists in creating an even redistribution of droplets deflected by the deflector.

Advantageously the path of the droplets has a main axis, and the deflector is mounted to deflect droplets away from the main axis, to create an annular curtain of spray.

It is advantageous for the axis of rotation of the deflector to be substantially parallel with the main axis. This helps to make the distribution of droplets within the curtain of spray more uniform.

Advantageously the path of the droplets is substantially cone-shaped, and the deflector is mounted substantially centrally in the cone-shaped path so as to create a curtain of sprayed droplets around the deflector.

Advantageously the means for dividing the flow comprises a rotatable blade.

Advantageously the deflector and the blade are connected together and mounted coaxially. This simplifies construction.

Advantageously the means for dividing the flow comprises a housing for directing the droplets towards the outlet.

Advantageously the deflector is sufficiently large and suitably positioned so as to intercept any line from the interior of the housing parallel to the main axis, to ensure droplets are not sprayed past the deflector along the main axis.

For a better understanding of the invention, and to show how the same may be carried into effect, reference will now be made by way of example to the accompanying drawings in which:
Figure 1 shows a known sprayer head in schematic form;
Figure 2 shows an improved sprayer head in schematic form, for inclusion in the pan-type coater to be described with reference to Figure 4;
Figure 3 shows a plan view of Figure 2 in schematic form; and
Figure 4 shows a side view cross-section of a pan-type coater forming an embodiment of the present invention:

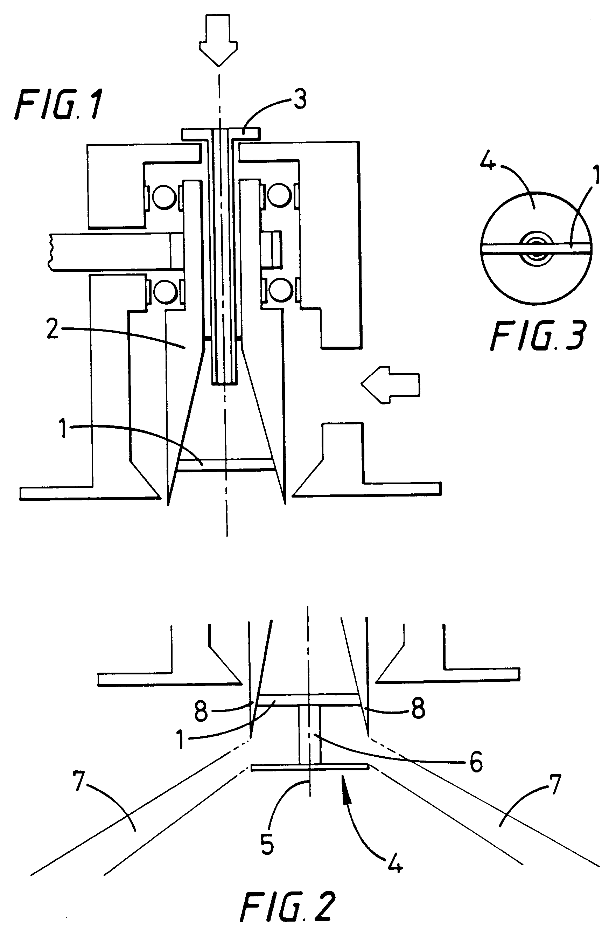

Referring to Figure 1, a known sprayer head is shown, which produces a cone-shaped spray from the lower end of the centrifuge as represented in the Figure.

According to the improved sprayer head, as shown in Figure 2, the known centrifuge is adapted by the addition of a rotatable deflector 4 in the form of a disc. As can be seen, this is mounted on a main axis 5 of the path of droplets created by the centrifuge. The rotatable deflector is caused to spin about the main axis due to the drive means constituted in this embodiment by the stem 6 which connects the deflector to the cross-beam 1 of the centrifuge.

The centrifuge device for dividing a flow of liquid from an inlet into droplets is advantageous as it is not prone to clogging, and is adaptable for use with liquids having widely differing viscosities or other characteristics. The spray cone shape can be adapted by varying the air flow rate and the speed of rotation. For a more detailed description of this type of device, reference is made to EP-A-0 349 510, the contents of which is incorporated herein by reference.

In operation, the rotatable deflector 4 catches any larger drips falling straight down from the centrifuge, and spins these drips outwards and disperses them into the main curtain of spray 7.

Clearly the rotatable deflector could be driven independently from the centrifuge. When connected with the centrifuge, a speed range of 1000 to 10000 rpm is preferred. The speed should be sufficiently low that the spray does not become too fine and drift in suspension in the air, resulting in liquid losses. The speed should be sufficiently high that the spray is not uneven owing to the droplets being too large and a continuous curtain not being properly formed.

The preferred speed depends to some extent on the diameter of the centrifuge and the rotatable deflector. With a diameter of 3 to 5 cm for the rotatable deflector, a rotation speed of approximately 4000 rpm is suitable.

It is preferred if the diameter of the deflector matches the diameter of a housing 8 provided on the centrifuge for directing the droplets created. This ensures that the deflector intercepts any line from the interior of the housing parallel to the main axis to ensure droplets are not sprayed past the deflector along the main axis.

The rotatable deflector may be smaller than the diameter of the housing, in which case the area to be sprayed can be increased, but with a risk of some sprayed droplets straying along the main axis.

It will be apparent that the rotatable deflector is advantageously mounted so as to deflect droplets away from the main axis, but alternative configurations are conceivable in which the deflector is mounted off the main axis and deflects drops onto the main axis.

The axis of rotation of the deflector is preferably substantially parallel with the main axis, but considerable deviation is conceivable.

The sprayer head overcomes the problems of large droplets caused by the centrifuge or other types of apparatus for generating droplets. Any large droplets are returned into the curtain of spray without wastage. The invention also enables an annular cone-shaped curtain of spray to be created without causing more large droplets. The evenness of the distribution of the spray and the consistency of droplet size is also improved, since the larger droplets are dispersed, and because the small amount of spray which would have been sprayed along the main axis, is redistributed.

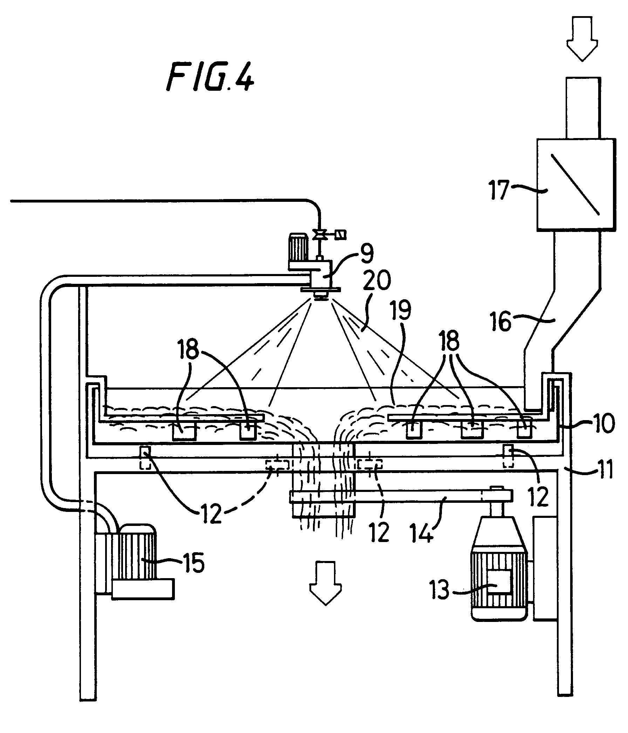

The pan-type coater as shown in Figure 4 will now be described. The coater comprises a sprayer 9 mounted above a pan 10. The sprayer may comprise a sprayer head as previously described with reference to Figures 1, 2 and 3. The pan is preferably a shallow cylindrical pan with a substantially horizontal base.

The pan is mounted on a frame 11 using bearings 12 and a motor 13 is provided to drive the rotation of the pan through a transmission link 14 such as a belt. A pump 15 is provided for blowing air into the sprayer 9. Solids are fed onto the base of the pan by an inlet pipe 16 connected to a flow rate measurement device such as a continuous impact weighing device 17, or other weighing or volumetric measurement device.

Paddles 18 are provided for moving the solids on the base of the pan. Because of the shape of the paddles, a moving bed of solids is created.

The paddles may have two functions. Firstly, to move the solid towards the center of the pan, and secondly to turn the bed of solids to bring solids from beneath the surface up to the surface of the bed, where they are exposed to the spray.

For the former function, a rectangular or triangular shape can be used, with a base of the triangle or rectangle lying against the base of the pan. Such a paddle can be mounted vertically and orientated so as to deflect the solids towards the center of the pan when the pan is rotated. The angle of the paddle relative to a radial of the pan can be varied according to the speed of rotation of the pan and the desired speed of flow of the bed of solids towards the center of the pan.

One of these flat paddles can be positioned near the inlet to deflect solids towards the centre of the pan after going round once on the outside of the pan.

For smoother deflection of the bed, the ends of the paddle can be bent towards the line of flow of the bed to give a gentle S-shaped plan view configuration. A single such paddle in the centre of the spraying zone can be sufficient.

For the function of turning the bed of solids to expose lower parts of the bed to the spray, a paddle shaped like a plough can be used. For both functions, the height of the paddles can be arranged so as to ensure they are completely or almost completely covered by the bed of solids. Two plough shaped paddles may be arranged diametrically opposite one another in the pan.

By varying the angle of orientation of the plough-shaped paddle, the two functions can be performed by a single paddle. Intermediate shapes of paddle combining the features of the various types of paddle described above can also be used.

The paddles operate to move the bed of solids in a spiral motion towards the centre of the pan, through a spraying zone 19 on the base of the pan. The sprayer 9 is preferably arranged to spray in a well-defined circular hollow conical curtain 20. This creates a ring-shaped spraying zone around the centre of the pan.

The coated solids are removed from an outlet, in this case formed by an aperture in the centre of the pan, through which the solids fall by gravity. For a more even coating, the speed of rotation of the pan and the arrangement of the paddle means is such that the solids are moved in a spiral of at least 360° while in the spraying zone. Again for improved evenness of coating, the average time any particular part of the bed remains in the spraying zone may be 5-60 seconds and should be preferably approximately 20-40 seconds, to ensure the solids are exposed regularly and evenly to the spray.

A speed of 20-50 rpm is preferred, although a range of 5 to 100 rpm can be used.

The pan-type coater as described achieves improvements in evenness of distribution and reduction of wastage of liquid. The combination of providing a bed of solids on the base of the pan, together with paddles for gently moving and turning the solids enables the bed to remain longer in the spraying zone. The gentle turning then enables substantially all the solids to be exposed on the surface for an average dwell time in the spraying zone which can be controlled according to the speed of rotation and the angle, position, and number of the paddles, to suit different types of solids.

The feature of providing a continuous bed of solids ensures that there is no wastage of liquid. Also, the gentle moving and turning action which is implied in such operation, in contrast to the prior art, preserves the solids better from damage. Therefore less dust or fines is created.

If the pan is rotatable and the paddles fixed, construction is simpler, and a centrifugal force acts on the bed of solids to push it away from the central outlet. This is beneficial in that the paddles need to exert a greater countering force to move the bed of solids towards the centre. A given change in flow rate towards the centre therefore requires a greater change in the orientation of the paddles. This reduces the range of change possible, but enables more accurate control of the rate of flow of the bed of solids.

The centrifugal force also improves the action of the plough shaped paddles for similar reasons.

Rotating the pan also has the advantage of evening out any lack of uniformity in the density of spray around the ring shaped spraying zone. A similar benefit would be possible by rotating the spraying means although this would involve more complex apparatus.

A similar effect to the centrifugal force could be obtained by the force of gravity if the base of the pan were to be sloped upwardly towards its centre.

Alternatively, the force of gravity could be used to assist the flow of the bed towards the central outlet by providing a base which slopes slightly downwards towards the central outlet.

In each case, the slope could be up to 30° from the horizontal but should preferably be relatively gentle e.g. <5^{o} so that there is little dependence on the coefficient of friction of the surface of the base. Also, any slope in the base should be relatively gentle so that the time the bed of solids is in the spray zone is not shortened unduly.

Where the sprayer is mounted above the central outlet as shown in Figure 4, it is clearly advantageous if the spray is prevented from reaching the central portion of the pan. Here, where the solids fall through a central aperture, the distribution of solids becomes unpredictable, and impossible to control. Therefore evenness of distribution of the liquid onto the solids could be affected if the spray were allowed to reach this part, particularly is large droplets are allowed to drip from the sprayer head.

Accordingly, it is advantageous if a sprayer head as described in relation to Figures 1, 2 and 3 is used with the pan coater of Figure 4. The amount of liquid sprayed can be closely controlled so as to conform precisely to the quantity of solids fed into the pan, by a controller (not shown).

The advantages achieved are particularly important when spraying very small amounts of liquid such as enzymes or other micro ingredients. When coating pellets of animal feed with very small amounts, e.g. in the region of 0.05 % by weight, of expensive enzymes, it is desirable to control the coating process very accurately to achieve a correct dosage for each animal. Such enzymes may have a response curve with a pronounced steep rise in response up to a given dose, then a flat response for larger doses. If the animal feeds are inaccurately coated with the enzyme, the optimium dose at the "break point" of the response curve is not achieved. If there is a wide variation in the amount of enzyme coated on each pellet (a large coefficient of variation) then a large proportion of the animals feed will either have too little enzyme, and therefore insufficient benefit, or too much enzyme and therefore the flat part of the response curve has been reached and the extra enzyme is wasted.

The disclosed embodiment enables the coefficient of variation to be reduced in spraying solids with liquids such as enzymes, so that the dose received by the animal can be more accurately controlled to be close to the optimum point on the response curve.

Although the embodiment disclosed is suitable for spraying 1% wt or less, of liquid, it can be used for spraying larger proportions of liquid, up to 5% wt at least. Throughputs of 1-100 tonnes of solids per hour can be envisaged.

## Claims

1. A pan-type coater for continuous spraying of liquid onto solids, comprising:
a pan (10) arranged for rotation about an upright axis passing through the centre of the pan;
first means (13,14) for rotating the pan about its upright axis;
second means (16) for feeding the solids onto the base of the pan to create a bed of solids on the base;
a sprayer (9) for spraying a zone of the bed of solids from above; and
third means (18) for moving the bed of solids on the base in a direction towards or away from said upright axis and through the spraying zone towards an outlet of the pan-type coater while bringing solids from beneath the surface of the bed, up to the surface of the bed, to expose substantially all of the solids to the spray for a substantially uniform dwell time before passing through said outlet.

2. A coater as claimed in claim 1, wherein the third means comprises an arrangement of paddles (18), relative to which the pan is rotatable, for moving the solids and bringing the solids to the surface as the pan rotates about its upright axis.

3. A pan-type coater as claimed in claim 1 or 2, wherein the spraying zone comprises a ring (20) around the centre of the pan.

4. A pan-type coater as claimed in any one of claims 1 to 3, wherein the outlet is in the centre of the pan (10), and the inlet at the periphery, or vice versa.

5. A pan-type coater as claimed in any one of claims 1 to 4, wherein the arrangement of the paddles (18) is such that the bed of solids is moved in a spiral path of at least 360° to the outlet through the spraying zone.

6. A pan-type coater as claimed in any preceding claim, wherein the base of the pan (10) is substantially horizontal.

7. A pan-type coater as claimed in any of claims 1 to 6 and arranged so that, in operation, the average time any part of the bed remains in the spraying zone is 20 to 40 seconds.

8. A pan-type coater according to any preceding claim, wherein the sprayer comprises an inlet (3), means (1) for dividing a flow of liquid from the inlet into droplets, a rotatable deflector (4) mounted in the path of the droplets, and drive means for spinning the deflector.

9. A pan-type coater as claimed in claim 8 wherein the deflector (4) is substantially circular viewed along its axis of rotation.

10. A pan-type coater as claimed in claim 8 or 9, wherein the path of the droplets has a main axis, and the deflector (4) is mounted to deflect droplets away from the main axis.

11. A pan-type coater as claimed in claim 10, wherein the axis of rotation of the deflector (4) is substantially parallel with the main axis.

12. A pan-type coater as claimed in any one of claims 8 to 11, wherein the path of the droplets is substantially cone-shaped, and the deflector (4) is mounted substantially centrally in the cone-shaped path so as to create a curtain (7) of sprayed droplets around the deflector.

13. A pan-type coater as claimed in any one of claims 8 to 12, wherein the means for dividing the flow comprises a rotatable blade (1).

14. Use of a coater as claimed in any preceding claim for spraying solids with a liquid.

15. Use of a coater as claimed in any preceding claim for spraying solids with < 1% wt. of liquid.

## Patentansprüche

1. Auftragvorrichtung vom Typ mit Vertiefung für ein fortlaufendes Sprühen von Flüssigkeit auf Festkörper, enthaltend:
eine Vertiefung (10) zum Durchführen einer Drehung um eine aufrechte Achse, die durch das Zentrum der Vertiefung läuft;
eine erste Vorrichtung (13, 14) zum Drehen der Vertiefung um deren aufrechte Achse;
eine zweite Vorrichtung (16) zum Zuführen der Festkörper auf die Basis der Vertiefung zum Erzeugen eines Betts von Festkörpern auf der Basis;
einen Sprühzerstäuber (9) zum Besprühen eines Bereichs des Betts der Festkörper von oben; und
eine dritte Vorrichtung (18) zum Bewegen des Betts der Festkörper auf der Basis in einer Richtung zu oder von der aufrechten Achse und durch die Sprühzone zu einem Auslaß der Auftragmaschine vom Typ mit Vertiefung bei Förderung der Festkörper von der Unterseite zu der Oberfläche des Betts, damit im wesentlichen alle Festkörper mit dem Sprühmittel in Kontakt gelangen, für eine im wesentlichen einheitliche Verweilzeit vor dem Durchtreten des Auslasses.

2. Auftragmaschine nach Anspruch 1, dadurch gekennzeichnet, daß die dritte Vorrichtung eine Anordnung aus Schaufeln (18) enthält, bezüglich der die Vertiefung drehbar ist, zum Bewegen der Festkörper und zum Führen dieser Festkörper an die Oberfläche bei Drehung der Vertiefung um deren aufrechte Achse.

3. Auftragmaschine vom Typ mit Vertiefung nach Anspruch 1 oder 2, dadurch gekennzeichnet, daß die Sprühzone einen Ring (20) um das Zentrum der Vertiefung enthält.

4. Auftragmaschine vom Typ mit Vertiefung nach einem der Ansprüche 1 bis 3, dadurch gekennzeichnet, daß sich der Auslaß im Zentrum der Vertiefung (10) befindet, und der Einlaß an dem Umfang, oder umgekehrt.

5. Auftragmaschine vom Typ mit Vertiefung nach einem der Ansprüche 1 bis 4, dadurch gekennzeichnet, daß die Anordnung der Schrauben (18) so ausgebildet ist, daß das Bett der Festkörper entlang einem Spiralpfad mindestens 360° zum Auslaß durch die Sprühzone geführt wird.

6. Auftragmaschine vom Typ mit Vertiefung nach einem der vorhergehenden Ansprüche, dadurch gekennzeichnet, daß die Basis der Vertiefung (10) im wesentlichen horizontal verläuft.

7. Auftragmaschine vom Typ mit Vertiefung nach einem der Ansprüche 1 bis 6, dadurch gekennzeichnet, daß betriebsgemäß die Durchschnittszeit für das Verbleiben eines Teils des Betts in der Spülzone 20 bis 40 Sekunden beträgt.

8. Auftragmaschine vom Typ mit Vertiefung nach einem der vorhergehenden Ansprüche, dadurch gekennzeichnet, daß der Sprühzerstäuber einen Einlaß (3) enthält, sowie eine Vorrichtung (1) zum Teilen einer Flüssigkeitsströmung von dem Einlaß in Tröpfchen, einen drehbaren Deflektor (4), der in dem Pfad der Tröpfchen montiert ist, und eine Antriebsvorrichtung zum schnellen Drehen des Deflektors.

9. Auftragmaschine vom Typ mit Vertiefung nach Anspruch 8, dadurch gekennzeichnet, daß der Deflektor (4) im wesentlichen entlang seiner Drehachse kreisförmig verläuft.

10. Auftragmaschine vom Typ mit Vertiefung nach Anspruch 8 oder 9, dadurch gekennzeichnet, daß der Tröpfchenpfad eine Hauptachse aufweist und daß der Deflektor (4) zum Ableiten der Tröpfchen von der Hauptachse montiert ist.

11. Auftragmaschine vom Typ mit Vertiefung nach Anspruch 10, dadurch gekennzeichnet, daß die Drehachse des Deflektors (4) im wesentlichen parallel zu der Hauptachse verläuft.

12. Auftragmaschine vom Typ mit Vertiefung nach einem der Ansprüche 8 bis 11, dadurch gekennzeichnet, daß der Pfad der Tröpfchen im wesentlichen kegelförmig ausgebildet ist und daß der Deflektor (4) im wesentlichen zentriert in den kegelförmigen Pfad montiert ist, zum Erzeugen eines Vorhangs (7) gesprühter Tröpfchen um den Deflektor.

13. Auftragmaschine vom Typ mit Vertiefung nach einem der Ansprüche 8 bis 12, dadurch gekennzeichnet, daß die Vorrichtung zum Teilen der Strömung ein drehbares Blatt (1) enthält.

14. Einsatz einer Auftragmaschine nach einem der vorhergehenden Ansprüche zum Sprühen von Flüssigkeit auf Festkörper.

15. Einsatz einer Auftragmaschine nach einem der vorhergehden Ansprüche zum Sprühen von Flüssigkeit mit weniger als 1% Gewicht.

## Revendications

1. Machine à coucher du type à cuvette pour pulvériser en continu du liquide sur des solides, comprenant :
une cuvette (10) conçue pour rotation autour d'un axe vertical passant à travers le centre de la cuvette ;
un premier moyen (13, 14) pour faire tourner la cuvette autour de son axe vertical ;
un second moyen (16) pour délivrer les solides sur la base de la cuvette afin de créer un lit de solides sur la base ;
un pulvérisateur (9) pour pulvériser une zone du lit de solides à partir du dessus ; et
un troisième moyen (18) pour déplacer le lit de solides sur la base dans une direction vers ledit axe vertical ou à l'opposé de celui-ci et à travers la zone de pulvérisation vers un orifice de sortie de la machine à coucher du type à cuvette tout en amenant les solides à partir du dessous de la surface du lit jusqu'à au-dessus de la surface du lit, pour exposer pratiquement la totalité des solides à la pulvérisation pendant un temps de présence sensiblement uniforme avant d'être passé à travers ledit orifice de sortie.

2. Machine à coucher selon la revendication 1 , dans laquelle le troisième moyen comprend une disposition de pales (18) par rapport auxquelles la cuvette est rotative, pour déplacer les solides et amener les solides à la surface à mesure que la cuvette tourne autour de son axe vertical.

3. Machine à coucher du type à cuvette selon la revendication 1 ou 2, dans laquelle la zone de pulvérisation constitue un anneau (20) autour du centre de la cuvette.

4. Machine à coucher du type à cuvette selon l'une quelconque des revendications 1 à 3, dans laquelle l'orifice de sortie se trouve au centre de la cuvette (10) et l'orifice d'entrée se trouve au niveau de sa périphérie, ou l'inverse.

5. Machine à coucher du type à cuvette selon l'une quelconque des revendications 1 à 4, dans laquelle la disposition des pales (18) est telle que le lit des solides est déplacé en un trajet en spirale d'au moins 360° vers l'orifice de sortie à travers la zone de pulvérisation.

6. Machine à coucher du type à cuvette selon l'une quelconque des revendications précédentes, dans laquelle la base de la cuvette (10) est sensiblement horizontale.

7. Machine à coucher du type à cuvette selon l'une quelconque des revendications 1 à 6 et conçue d'une manière telle que, en fonctionnement, le temps moyen où chaque partie du lit reste dans la zone de pulvérisation est situé entre 20 à 40 secondes.

8. Machine à coucher du type à cuvette selon l'une quelconque des revendications précédentes, dans laquelle le pulvérisateur comprend un orifice d'entrée (3), un moyen (1) pour séparer un écoulement du liquide provenant de l'orifice d'entrée en gouttelettes, un déviateur rotatif (14) monté dans le trajet des gouttelettes et un moyen d'entraînement pour faire tourner le déviateur.

9. Machine à coucher du type à cuvette selon la revendication 8, dans laquelle le déviateur (4) est sensiblement circulaire lorsque vu le long de son axe de rotation.

10. Machine à coucher du type à cuvette selon la revendication 8 ou 9, dans laquelle le trajet des gouttelettes comprend un axe principal et le déviateur (4) est monté pour dévier les gouttelettes loin de l'axe principal.

11. Machine à coucher du type à cuvette selon la revendication 10, dans laquelle l'axe de rotation du déviateur (4) est sensiblement parallèle à l'axe principal.

12. Machine à coucher du type à cuvette selon l'une quelconque des revendications 8 à 11, dans laquelle le trajet des gouttelettes est sensiblement en forme de cône et le déviateur 4 est monté sensiblement au centre du trajet en forme de cône de façon à créer un rideau (7) de gouttelettes pulvérisées autour du déviateur.

13. Machine à coucher du type à cuvette selon l'une quelconque des revendications 8 à 12, dans laquelle le moyen pour séparer l'écoulement comprend une lame rotative (1).

14. Utilisation d'une machine à coucher selon l'une quelconque des revendications précédentes pour pulvériser du liquide des solides.

15. Utilisation d'une machine à coucher selon l'une quelconque des revendications précédentes servant à pulvériser du liquide sur des solides avec < 1% de liquide.
